(19) Europäisches Patentamt
European Patent Office
Office européen des brevets

(11) Publication number: **0 331 086 B1**

(12) **EUROPEAN PATENT SPECIFICATION**

(45) Date of publication of patent specification: **17.05.95**

(51) Int. Cl.⁶: **C08L 67/02**, C08K 5/09

(21) Application number: **89103426.6**

(22) Date of filing: **27.02.89**

The file contains technical information submitted after the application was filed and not included in this specification

(54) **Rapidly crystallizing polyester compositions.**

(30) Priority: **29.02.88 IT 1957588**

(43) Date of publication of application: **06.09.89 Bulletin 89/36**

(45) Publication of the grant of the patent: **17.05.95 Bulletin 95/20**

(84) Designated Contracting States: **AT BE DE ES FR GB NL SE**

(56) References cited:
**EP-A- 0 025 573**
**FR-A- 2 418 255**

**PATENT ABSTRACTS OF JAPAN, vol. 9, no. 237 (C-305) (1960), 24th September 1988, & JP-A-60 096 645**

(73) Proprietor: **Montefibre S.p.A.**
**Via Pola 14**
**Milan (IT)**

(72) Inventor: **Bastioli, Catia**
**63,Via Della Noce**
**I-28100 Novara (IT)**
Inventor: **Bellotti, Vittorio**
**3, Via Mora e Gibin**
**I-28010 Fontaneto d'Agogna**
**Novara (IT)**
Inventor: **Gazzarata, Nello**
**75, Corso De Rege**
**I-13100 Vercelli (IT)**

(74) Representative: **Barz, Peter, Dr. et al**
**Patentanwälte Dipl.-Ing. G. Dannenberg**
**Dr. P. Weinhold, Dr. D. Gudel**
**Dipl.-Ing. S. Schubert, Dr. P. Barz**
**Siegfriedstrasse 8**
**D-80803 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

The present invention relates to polyester compositions suitable for injection moulding. In particular, the invention relates to compositions based on linear and saturated polyesters which, after addition of nucleating and plasticizing agents, afford high crystallization rates even when water-heated moulds are employed.

Saturated linear thermoplastic polyesters such as PET, its blends and copolymers, are produced on a large scale at comparatively low costs and show, in their crystalline state, excellent physical properties consistent with their high melting points.

The formulations based on said polyesters can, however, only be applied to a limited extent in the field of injection moulding mainly because of the difficulties experienced in obtaining properly crystallized articles when using conventional moulds. A non-modified PET crystallizes very slowly in the molten state, making the process uneconomic and resulting in articles having a crystalline structure of the inhomogeneous spherolitical type, low impact strength and a rough surface. The processing of said PET requires high moulding temperatures and long residence times in the mould if dimensionally stable articles are to be obtained. In fact, the premature removal of an article which has not sufficiently crystallized from the mould may subsequently lead to a further crystallization, causing a change in the volume and a possible distortion of the shape of the article.

From a practical point of view it would be desirable to achieve satisfactory properties with respect to the crystallization rate even if conventional water-heated moulds are employed.

Additives are known which allow an increase of the crystallization rate of the polyesters in the molten state. These additives, however, affect the cold crystallization temperature, a parameter determining the lowest possible moulding temperature only in a secondary way. In fact, in the case of non-modified PET the cold crystallization temperature, determined with a differential calorimeter, shows a maximum at 135 °C and, when nucleants of the salt type (sodium benzoate, sodium o-chlorobenzoate and the like) are added to said PET, said temperature is lowered only a little (130 °C).

Examples of such formulations are, for instance, described in US-A-3 516 957; JP-A-71-029977; DE-A-20 14 770, 19 45 967 and 19 45 101.

It is known that, in order to drastically change the cold crystallization temperature of a resin as well as the glass transition temperature of the amorphous phase, it is necessary to use plasticizers.

The patent literature contains numerous examples of references describing the use of conventional plasticizers in combination with PET. These plasticizers are generally selected from aliphatic esters of phthalic, adipic or sebacic acids and aliphatic and aromatic esters of phosphoric acid.

Such compositions are, for instance, described in US-A-4 344 874 and 4 440 889 as well as in JP-A-049747/83.

These classes of plasticizers have, however, been developed particularly for PVC and do not show sufficient interaction with the polyester resin, both with respect to miscibility (the formation of separated phases is observed) and to effectiveness (little influence on the glass transition temperature (Tg), the viscosity of the molten product, the modulus, etc.). Only a few low molecular weight aromatic esters and the polyoxyalkylene glycols show some degree of interaction with the resin. Among the former compounds neopentyl glycol dibenzoate is predominantly employed but the use of diethylene glycol dibenzoate, triethylene glycol dibenzoate, glyceryl tribenzoate and the like has also been described. Examples of such compositions can be found, among others, in US-A-4 440 889 and 4 344 874. This class of products, owing to their low boiling points, however gives rise to the undesired formation of large amounts of smoke during processing. More interesting from this point of view is the use of polyethers of the polyoxyalkylene glycol type.

There are many patent documents which relate to polyester compositions containing a nucleating agent and a plasticizer of the polyoxyalkylene glycol type. JP-A-157144/1984 describes the nucleation and plasticization of PET by means of Na stearate and polyoxyethylene glycol lauryl glycidyl ether. JP-A-24747/84 discloses the use of an ethylene-methacrylic acid copolymer salified with Na in combination with polyoxyethylene glycol dimethyl ether in order to improve the moulding of PET. JP-A-143384/57 describes a polyester composition modified by the addition of polyoxyethylene glycol diphthalate disodium salt. US-A-4 365 036 describes a nucleating agent based on a complex of NaI and polyoxyethylene glycol. US-A-4 558 085 describes a nucleant based on a complex of polyoxyethylene glycol and sodium salts of aliphatic acids. EP-A-25573 uses, as a nucleant, a polyoxyalkylene compound having an alkali metal carboxylate group connected via an ester linkage. However, even when these additives are used, no satisfactory results are obtained, particularly as far as the moulding is concerned.

Applicant has found that the above problems may be solved by using an additive combining in a single structure a saline function exerting a nucleating action and a polyoxyalkylene sequence. Subject matter of the present invention are, therefore, rapidly crystallizing polyester compositions suitable for processing in conventional water-heated moulds, comprising a thermoplastic polyester resin and from 0.1 to 30% by weigth, based on the resin, of a nucleating agent selected from the salts or mixtures of salts of organic acids having the general formula I:

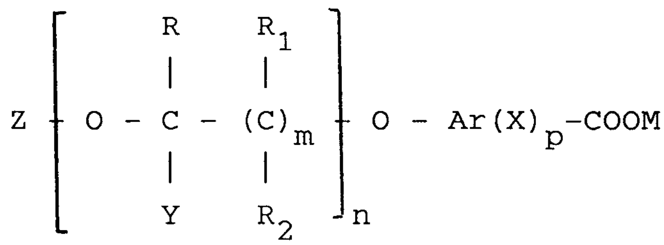
(I)

wherein:

M is an alkali metal or alkaline earth metal (in the latter case M represents half an equivalent of the bivalent metal ion);

X is a group selected from

$-CH_2-$,

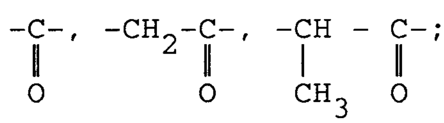

p is 0 or 1;

Ar is a normal or condensed aromatic ring comprising from 6 to 14 carbon atoms which may, optionally, be substituted by one or more groups selected from halogen atoms, $C_1$-$C_8$ alkyl groups, $C_1$-$C_8$ alkoxy groups and nitro groups; or Ar represents two or more optionally substituted aromatic nuclei, each of them having from 6 to 14 carbon atoms, linked either by a simple covalent bond or by an -O-, -S-, $-SO_2-$, -SO-, -CO-, -CS-, -NH- group;

R, $R_1$, $R_2$, the same or different from each other, represent H, a linear or branched $C_1$-$C_6$ alkyl group, optionally substituted with one or more groups selected from halogen atoms and $C_1$-$C_6$ alkoxy groups;

Y is H or $CH_3$;

m is 1 when Y is $CH_3$; or is an integer of from 1 to 5 (including both extremes), particularly 1 to 3, when Y = H;

n is a number ranging from 1 to 500 (including both extremes);

Z is H, $C_1$-$C_{18}$ alkyl, benzyl, allyl;

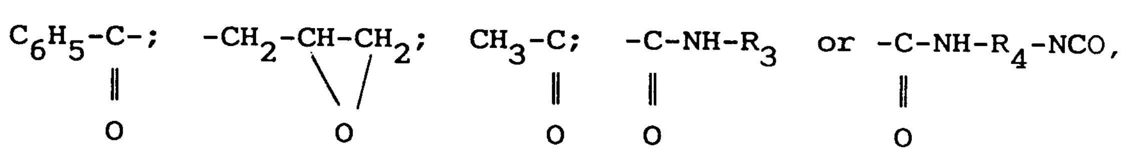

wherein $R_3$ is an unsubstituted phenyl group or a phenyl group substituted with one or more halogen atoms (for example, Cl, F) or is a $C_{10}$-$C_{40}$ alkyl group and $R_4$ is an unsubstituted phenylene group or a phenylene group substituted with one or more halogen atoms (for example, Cl, F) or represents a $C_{10}$-$C_{40}$ alkylene group.

Preferred embodiments for the various groups and indices mentioned above are:

| | |
|---|---|
| M : | Na, K, Li, Ca and Mg, particularly Na and K; |
| Ar: | phenylene, naphthylene, biphenylene, optionally substituted with one or more, particularly one or two groups selected from F, Cl, Br, I (particularly F and Cl), $C_1$-$C_8$ - (preferably $C_1$-$C_4$) alkyl groups (such as methyl, ethyl, n- and i-propyl, n-, sek-, i- and tert-butyl), $C_1$-$C_8$ (preferably $C_1$-$C_4$) alkoxy groups (such as methoxy, ethoxy, propoxy |

and butoxy) and $NO_2$; also preferred are phenylene groups linked by -O-, -S-, $SO_2$-, -SO-, -CO-, -CS- and -NH- groups;

R, $R_1$ and $R_2$: H, $C_1$-$C_4$ alkyl groups such as methyl and ethyl, said groups being optionally substituted with one or more (particularly one or two) groups selected from F, Cl, Br, I (particularly F and Cl) and $C_1$-$C_4$ alkoxy groups (particularly methoxy and ethoxy);

n: an integer ranging from about 10 to about 250, particularly from about 20 to about 150;

Z: H, $C_1$-$C_{10}$ (particularly $C_1$-$C_6$) alkyl groups (such as methyl, ethyl, propyl, butyl, pentyl and hexyl), acetyl, glycidyl, benzyl, allyl, benzoyl, $CONHR_3$ and $CONHR_4NCO$;

$R_3$: unsubstituted phenyl, $C_{10}$-$C_{30}$ (particularly $C_{10}$-$C_{20}$) alkyl groups;

$R_4$: unsubstituted phenylene, $C_{10}$-$C_{30}$ (particularly $C_{10}$-$C_{20}$) alkylene groups.

The compounds having general formula (I) may be prepared by conventional methods, starting from an ester of the acid:

$HO\text{-}Ar(X)_pCOOH$ (II)

wherein Ar, X and p have the meanings as specified above. Said acid is reacted in an autoclave with a suitable alkylene oxide in the presence of alkali, at a temperature of 130 °C and a pressure of up to 304 kPa (3 atmospheres).

The product thus obtained is then saponified by means of an alkali metal hydroxide to obtain the salt of the acid. Thereafter, the OH end groups of the polyoxyalkylene chains may be functionalized by known techniques.

The use of the products having formula (I) is advantageous in that, besides obtaining the required degree of plasticization, the polyoxyalkylene chain, soluble in the resin, promotes the dispersion of the nucleating agent with formation of a homogeneous microcrystalline structure. Moreover, the OH-terminated end of the polyoxyalkylene chain may be functionalized with ether, ester, urethane, epoxide or allyl groups and therefore allows adaptability to a wide variety of applications, according to the required final properties.

Examples of nucleating agents of formula (I), which can be used to advantage in the compositions of the present invention are those, wherein Z, Y, m, n, Ar, X and M have the meanings indicated in the following table I, R, $R_1$ and $R_2$ representing H.

TABLE I

| Z | Y | m | n | Ar | X* | M |
|---|---|---|---|---|---|---|
| 1) H | H | 1 | about 20 | 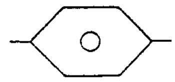 | - | Na |
| 2) H | $CH_3$ | 1 | about 20 | 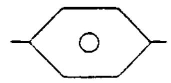 | - | Na |
| 3) 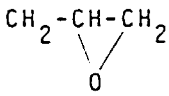 | H | 1 | about 90 | 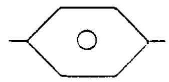 | - | Na |
| 4) 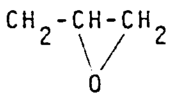 | $CH_3$ | 1 | about 90 | 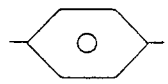 | - | Na |
| 5) 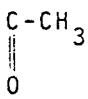 | H | 1 | about 90 | 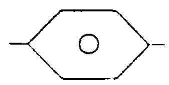 | - | Na |
| 6) 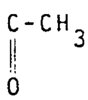 | $CH_3$ | 1 | about 90 | 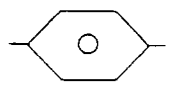 | - | Na |
| 7) 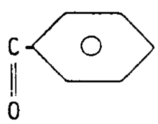 | H | 1 | about 90 | 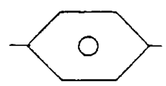 | - | Na |
| 8) 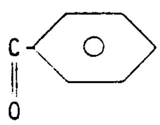 | $CH_3$ | 1 | about 90 | 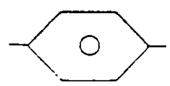 | - | Na |
| 9) $CH_3$ | H | 1 | about 90 | 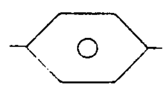 | - | Na |
| 10) $CH_3$ | $CH_3$ | 1 | about 90 | 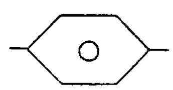 | - | Na |
| 11) $C_2H_5$ | H | 1 | about 90 | 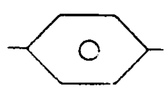 | - | Na |

Table I (continued)

| Z | Y | m | n | Ar | X* | M |
|---|---|---|---|---|---|---|
| 12) $C_2H_5$ | $CH_3$ | 1 | about 90 | 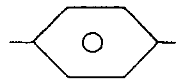 | - | Na |
| 13) $C_3H_7$ | H | 1 | about 90 | 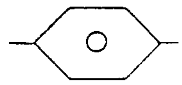 | - | Na |
| 14) $C_3H_7$ | $CH_3$ | 1 | about 90 | 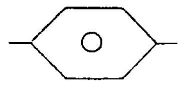 | - | Na |
| 15) $CH_2$ 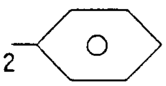 | H | 1 | about 90 | 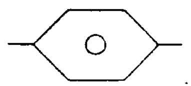 | - | Na |
| 16) $CH_2$ 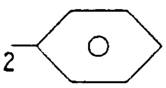 | $CH_3$ | 1 | about 90 | 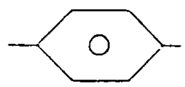 | - | Na |
| 17) 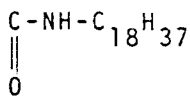 | H | 1 | about 20 | 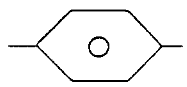 | - | Na |
| 18) 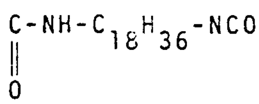 | H | 1 | about 20 | 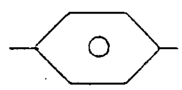 | - | Na |
| 19) H | H | 1 | about 20 | 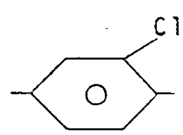 | - | Na |
| 20) H | H | 1 | about 20 | 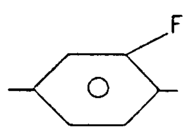 | - | Na |
| 21) H | H | 1 | about 20 | 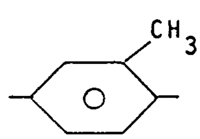 | - | Na |

Table I (continued)

| Z | Y | m | n | Ar | X* | M |
|---|---|---|---|---|---|---|
| 22) H | H | 1 | about 20 | 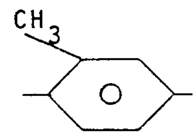 | - | Na |
| 23) H | H | 1 | about 20 | 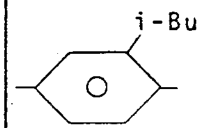 | - | Na |
| 24) H | H | 1 | about 20 | 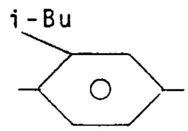 | - | Na |
| 25) H | H | 1 | about 20 | 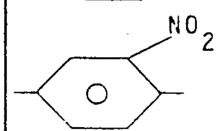 | - | Na |
| 26) H | H | 1 | about 20 | 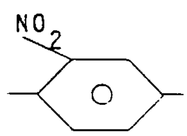 | - | Na |
| 27) H | H | 1 | about 20 | 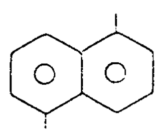 | - | Na |
| 28) H | H | 1 | about 20 | 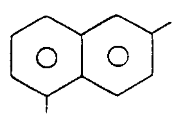 | - | Na |
| 29) H | H | 1 | about 20 | 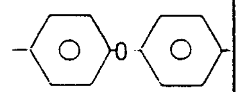 | - | Na |
| 30) H | H | 1 | about 20 | 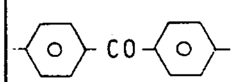 | - | Na |
| 31) H | H | 1 | about 20 | 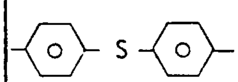 | - | Na |
| 32) H | H | 1 | about 20 | 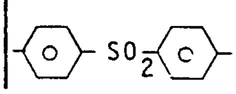 | - | Na |

Table I (continued)

| Z | Y | m | n | Ar | X* | M |
|---|---|---|---|---|---|---|
| 33) H | H | 1 | about 20 | 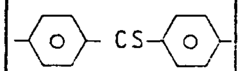 | - | Na |
| 34) H | H | 1 | about 20 | 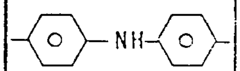 | - | Na |
| 35) $-CH_2-CH-CH_2$<br>\ /<br>O | H | 1 | about 90 | 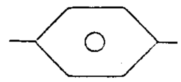 | CO | Na |
| 36) H | H | 1 | about 20 | 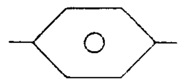 | CO | Na |
| 37) $CH_2-CH-CH_2$<br>\ /<br>O | H | 1 | about 90 | 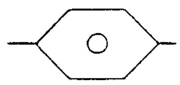 | $-CH_2-CO-$ | Na |
| 38) H | H | 1 | about 20 | 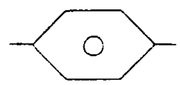 | $-CH_2-CO-$ | Na |
| 39) $CH_2-CH-CH_2$<br>\ /<br>O | H | 1 | about 90 | 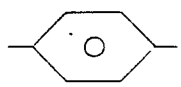 | -CH-CO-<br>\|<br>$CH_3$ | Na |
| 40) H | H | 1 | about 20 | 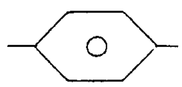 | -CH-CO-<br>\|<br>$CH_3$ | Na |
| 41) H | H | 2 | about 20 | 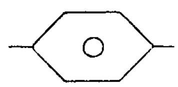 | - | Na |
| 42) H | H | 3 | about 20 | 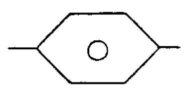 | - | Na |
| 43) H | H | 1 | about 20 | 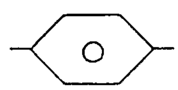 | $-CH_2-$ | Na |

* = (-) relates to the case p = 0, i.e., X represents a simple covalent bond.

The compounds of formula (I), in which Ar is

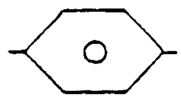

and p = 0; R, $R_1$ and $R_2$ being H and m = 1, i.e., all the compounds of formula (I) derived from hydroxybenzoic acid and having polyoxyethylene or polyoxypropylene chains, are particularly preferred for the purposes of the present invention.

The nucleating agent can be added to the polyester resin

(i) directly, in amounts depending on the molecular weight but, preferably, not above 30% by weight with respect to the resin; or

(ii) after having mixed, in the molten state, nucleating agent and polyester resin in order to obtain a masterbatch.

The masterbatch can be obtained by conventional compounding, adding the nucleating agent of formula (I) in concentrations which can be very high, up to 50% by weight.

In the first case (direct addition) the nucleating agent is mixed with the resin in the molten state in amounts ranging from 0.1 to 30% by weight (preferably from 0.2 to 15% by weight) according to the molar weight and to the metal content in the agent.

In the case of a masterbatch nucleation, amounts of masterbatch ranging from 1 to 50% by weight, preferably from 2 to 20% by weight, are preferably added.

In order to obtain the compositions according to the present invention , the nucleating agents of formula (I) can be incorporated into the polyester by any conventional method of incorporating additives into a molten polyester, for instance by compounding in mixers, extruders and the like. The polyester resin is generally selected from the group comprising polyethylene terephthalate, polybutylene terephthalate, mixtures or copolymers thereof, polyethylene terephthalate modified by the introduction of polyalkylene, polyarylate or polycarbonate segments.

The rapidly crystallizing polyester compositions of the present invention are characterized by high crystallization temperatures, homogeneous distribution and low concentrations of the nucleant.

Inert fillers such as glass, carbon, boron fibres and the like, inorganic particles of glass, mica, zeolites, graphite, talc and the like, organic fibres of the aramide or polyacrylonitrile type and the like may be added to the compositions.

Furthermore, if required, usual additives and/or auxiliary substances may be added to the composition in order to improve thermal, oxidative and light stability. Other additives such as pigments, dyes, flame retardant agents, release agents, various inert fillers or other types of thermoplastic resins or rubbers may also be added in order to impart high impact properties.

The compositions of the present invention can be employed in the manufacture of a host of moulded articles by injection moulding or extrusion, in particular in automotive parts, parts for electric devices and the like.

The following examples merely serve to illustrate the invention and do not limit it in any way.

**Working Conditions**

In all examples the following procedure was employed:

A predetermined amount of PET, having an inherent viscosity of 0.78 dl/g, which had previously been dried for 12 hours under vacuum at 120 °C, was mixed in a mixer with an amount of a nucleating agent in the ratios given in table II and the mixture obtained was extruded at 280 °C.

The compounds were obtained from a 1.9 cm (3/4 inch) extruder type HAAK RHEOCORD EC.

The samples obtained were tested with a differential calorimeter (DSC-7 PERKIN ELMER) by using specimens which had been made amorphous and by increasing the temperature at a predetermined rate until melting and subsequent decrease in order to record the crystallization temperature in the molten state.

The cold crystallization temperature was recorded during the increase phase. The temperature was recorded in coincidence with the peak maximum. The inherent viscosity ($\eta$) was measured in a 60:40 mixture of phenol and tetrachloroethane at 30 °C (concentration 0.25 g/dl).

**EXAMPLES 1 TO 3**

Examples 1 to 3 were control samples.

Example 1, in table II, refers to PET without additive.

Example 2 shows the effects obtained when adding sodium benzoate, a conventional nucleant.

Examples 3 illustrates the action of sodium p-hydroxybenzoate as such (basic product for obtaining the nucleants used in the examples).

**EXAMPLES 4 TO 6**

Examples 4 to 6 show that an epoxide-terminated nucleant affects, in relation to the incorporated amount, both the cold crystallization temperature by lowering it (plasticizing effect) and the crystallization in the molten state by promoting it (nucleating effect).

**EXAMPLES 7 TO 9**

In examples 7 to 9 the ester type (acetate) termination of the polyoxyethylene chains affords a sharper effect on the cold crystallization temperature as compared with the epoxide termination.

**EXAMPLE 10**

The benzyl ether termination in example 10 results in effects which are comparable to the ones observed in example 9.

**EXAMPLES 11 TO 14**

In examples 11 to 14 the molecular weight of the epoxide chain was drastically reduced in order to examine the nucleating power only.

Examples 11 and 12 refer to a nucleant provided with alcoholic termination and the nucleating ability is excellent; plasticization is low owing to the smaller contribution of polyethylene glycol; the inherent viscosity is lower, possibly owing to transesterification reactions of the alcohol group.

Examples 13 and 14 show an improved viscosity which is due to the urethane termination of the additive.

TABLE II

| Example | Test | Additive (%) | Na (%) | Cold crystallization temperature * | Temperature of crystallization in molten state | $\eta_{inh}$ (dl/g) |
|---|---|---|---|---|---|---|
| 1 | PET as such | 0 | 0 | 138 | 188 | 0.78 |
| 2 | PET + sodium benzoate | 0.313 | 0.050 | 132 | 203 | 0.65 |
| 3 | PET + sodium p-hydroxybenzoate | 0.300 | 0.043 | 134 | 205 | 0.66 |
| 4 | PET + 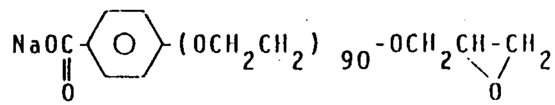 | 2.5 | 0.014 | 122 | 210 | 0.67 |
| 5 | PET + 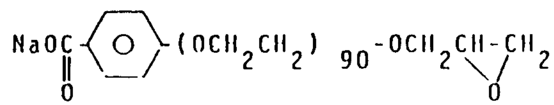 | 5.0 | 0.028 | 117 | 214 | 0.64 |
| 6 | PET + 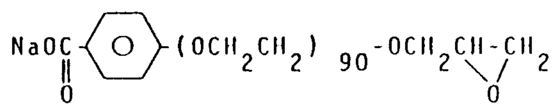 | 7.5 | 0.042 | 113 | 216 | 0.62 |
| 7 | PET + 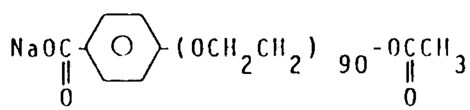 | 2.5 | 0.014 | 120 | 211 | 0.68 |
| 8 | PET + 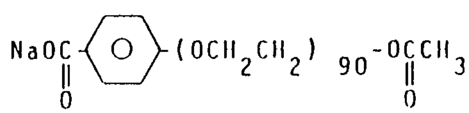 | 5.0 | 0.028 | 111 | 215 | 0.66 |

Table II (continued)

| Example | Test | Additive (%) | Na (%) | Cold crystallization temperature * | Temperature of crystallization in molten state | $\eta_{inh}$ (dl/g) |
|---|---|---|---|---|---|---|
| 9 | PET + 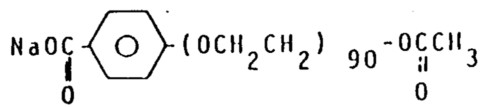 | 7.5 | 0.042 | 109 | 216 | 0.65 |
| 10 | PET + 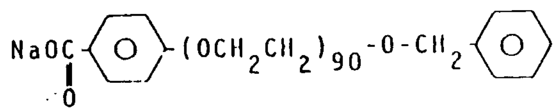 | 7.5 | 0.040 | 108 | 215 | 0.61 |
| 11 | PET + 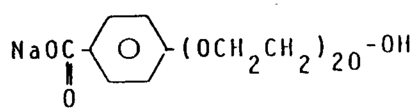 | 0.45 | 0.010 | 126 | 209 | 0.63 |
| 12 | PET + 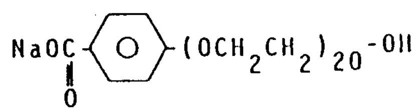 | 1.0 | 0.022 | 119 | 217 | 0.56 |
| 13 | PET + 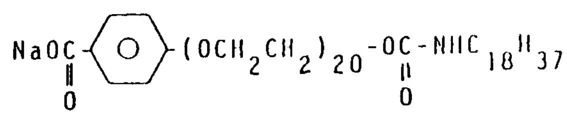 | 0.5 | 0.0086 | 128 | 206 | 0.70 |
| 14 | PET + 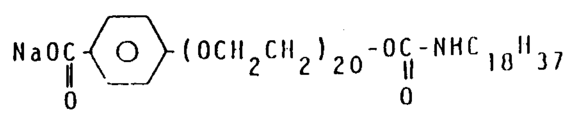 | 1 | 0.017 | 126 | 209 | 0.67 |

* Temperature measured at the peak maximum by means of calorimeter DSC-7 Perkin Elmer

## Claims

### Claims for the following Contracting States : AT, BE, DE, FR, GB, NL, SE

1. Rapidly crystallizing polyester compositions comprising a thermoplastic polyester resin and from 0.1 to 30% by weight, based on the resin, of a nucleating agent selected from salts or mixtures of salts of organic acids of the general formula:

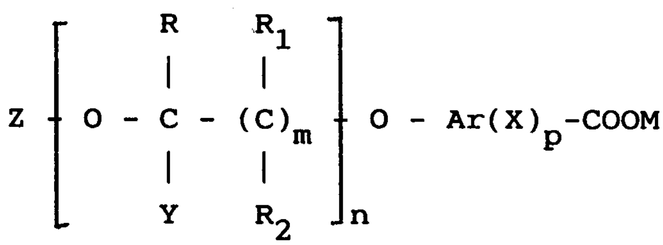

(I)

wherein:
M is an alkali metal or alkaline earth metal;
X is a group selected from
$-CH_2-$,

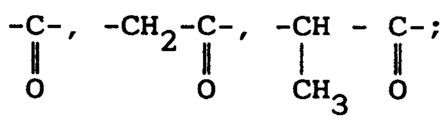

p is 0 or 1;
Ar is a normal or condensed aromatic ring of from 6 to 14 carbon atoms, optionally, having one or more substituents selected from halogen atoms, $C_1$-$C_8$ alkyl groups, $C_1$-$C_8$ alkoxy groups or nitro groups; or Ar represents two or more optionally substituted aromatic nuclei, each of them having from 6 to 14 carbon atoms, linked either by a covalent bond or by an -O-, -S-, $-SO_2$, -SO-, -CO-, -CS-, -NH- group;
R, $R_1$, $R_2$, the same or different from each other, represent H, a linear or branched $C_1$-$C_6$ alkyl group, optionally having one or more substituents selected from halogen atoms and $C_1$-$C_6$ alkoxy groups;
Y is H or methyl;
m is 1 when Y is methyl; or an integer of from 1 to 5 inclusive when Y = H;
n is a number ranging from 1 to 500 inclusive;
Z is a group selected from H, $C_1$-$C_{18}$ alkyl, benzyl;

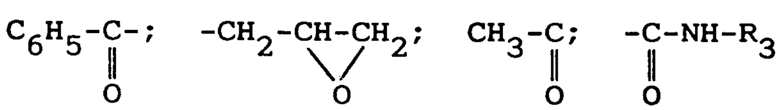

$-CH_2-CH=CH_2$ or

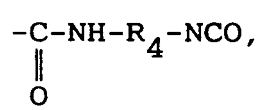

wherein $R_3$ represents an unsubstituted phenyl group or a phenyl group substituted with one or more halogen atoms or is a $C_{10}$-$C_{40}$ alkyl group; $R_4$ represents an unsubstituted phenylene group or a phenylene group substituted with one or more halogen atoms or is a $C_{10}$-$C_{40}$ alkylene group.

2. Compositions according to claim 1, wherein the nucleating agent is added in amounts ranging from 0.2 to 15% by weight, based on the resin.

**3.** Compositions according to claim 1 or 2, wherein the thermoplastic polyester resin is selected from polyethylene terephthalate, polybutylene terephthalate, mixtures or copolymers thereof and polyethylene terephthalate modified by the introduction of polyoxyalkylene, polyarylate or polycarbonate segments.

**4.** Compositions according to any one of claims 1 to 3, wherein, in formula (I), p = 0, Ar is a 1,4-phenylene group, R, $R_1$ and $R_2$ are H and m = 1.

**5.** Compositions according to any one of the preceding claims, wherein, in general formula (I), Z is a glycidyl, acetyl, benzoyl, allyl, $C_1$-$C_{18}$ alkyl or benzyl group.

**6.** Compositions according to any one of the preceding claims also comprising one or more additives selected from inert fillers such as glass, carbon, boron fibres and/or inorganic particles of glass, mica, zeolites, graphite or talc; organic fibres of the aramide or polyacrylonitrile type and the like and/or thermal (or processing) stabilizers, plasticizers, dyes and pigments, flame retardants, release agents, antioxidants, light stabilizers, other types of thermoplastic resins or elastomeric compositions.

**7.** A process for preparing a composition according to any one of the preceding claims, wherein the nucleating agent is added in the form of a separately prepared masterbatch.

**8.** A process according to claim 7, wherein the masterbatch is added in amounts ranging from 1 to 50% by weight, preferably from 2 to 20% by weight, based on the resin.

**9.** A process according to any one of claims 7 and 8, wherein the masterbatch is obtained by mixing the nucleating agent having formula (I) with a polyester resin in concentrations ranging from 0.5 to 20% by weight, preferably from 1 to 10% by weight, based on the resin.

**Claims for the following Contracting State : ES**

**1.** Rapidly crystallizing polyester compositions comprising a thermoplastic polyester resin and from 0.1 to 30% by weight, based on the resin, of a nucleating agent selected from salts or mixtures of salts of organic acids of the general formula:

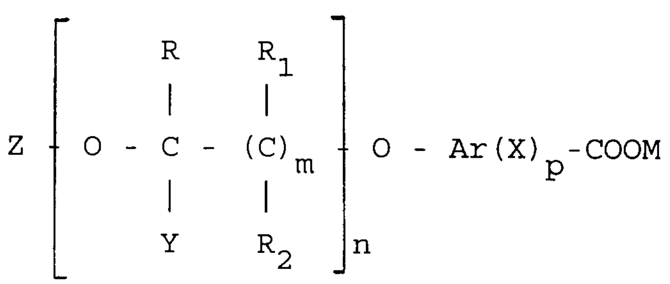

(I)

wherein:
M is an alkali metal or alkaline earth metal;
X is a group selected from
-$CH_2$-,

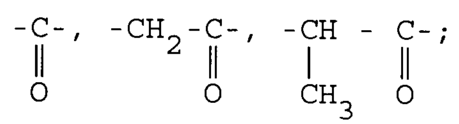

p is 0 or 1;
Ar is a normal or condensed aromatic ring of from 6 to 14 carbon atoms, optionally, having one or more substituents selected from halogen atoms, $C_1$-$C_8$ alkyl groups, $C_1$-$C_8$ alkoxy groups or nitro groups; or Ar represents two or more optionally substituted aromatic nuclei, each of them having from 6 to 14

carbon atoms, linked either by a covalent bond or by an -O-, -S-, $-SO_2-$, -SO-, -CO-, -CS-, -NH- group; R, $R_1$, $R_2$, the same or different from each other, represent H, a linear or branched $C_1$-$C_6$ alkyl group, optionally having one or more substituents selected from halogen atoms and $C_1$-$C_6$ alkoxy groups;
Y is H or methyl;
m is 1 when Y is methyl; or an integer of from 1 to 5 inclusive when Y = H;
n is a number ranging from 1 to 500 inclusive;
Z is a group selected from H, $C_1$-$C_{18}$ alkyl, benzyl;

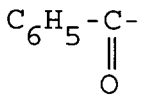 ; 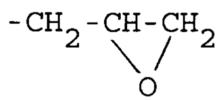 ; 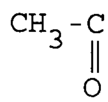 ; 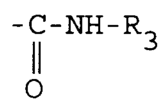

$-CH_2-CH=CH_2$ or

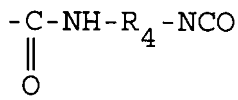 ,

wherein $R_3$ represents an unsubstituted phenyl group or a phenyl group substituted with one or more halogen atoms or is a $C_{10}$-$C_{40}$ alkyl group; $R_4$ represents an unsubstituted phenylene group or a phenylene group substituted with one or more halogen atoms or is a $C_{10}$-$C_{40}$ alkylene group.

**2.** Compositions according to claim 1, wherein the nucleating agent is added in amounts ranging from 0.2 to 15% by weight, based on the resin.

**3.** Compositions according to claim 1 or 2, wherein the thermoplastic polyester resin is selected from polyethylene terephthalate, polybutylene terephthalate, mixtures or copolymers thereof and polyethylene terephthalate modified by the introduction of polyoxyalkylene, polyarylate or polycarbonate segments.

**4.** Compositions according to any one of claims 1 to 3, wherein, in formula (I), p = 0, Ar is a 1,4-phenylene group, R, $R_1$ and $R_2$ are H and m = 1.

**5.** Compositions according to any one of the preceding claims, wherein, in general formula (I), Z is a glycidyl, acetyl, benzoyl, allyl, $C_1$-$C_{18}$ alkyl or benzyl group.

**6.** Compositions according to any one of the preceding claims also comprising one or more additives selected from inert fillers such as glass, carbon, boron fibres and/or inorganic particles of glass, mica, zeolites, graphite or talc; organic fibres of the aramide or polyacrylonitrile type and the like and/or thermal (or processing) stabilizers, plasticizers, dyes and pigments, flame retardants, release agents, antioxidants, light stabilizers, other types of thermoplastic resins or elastomeric compositions.

**7.** A process for preparing rapidly crystallizing polyester compositions, which process comprises adding to a thermoplastic polyester resin from 0.1 to 30% by weight, based on the resin, of a nucleating agent selected from salts or mixtures of salts of organic acids of the general formula:

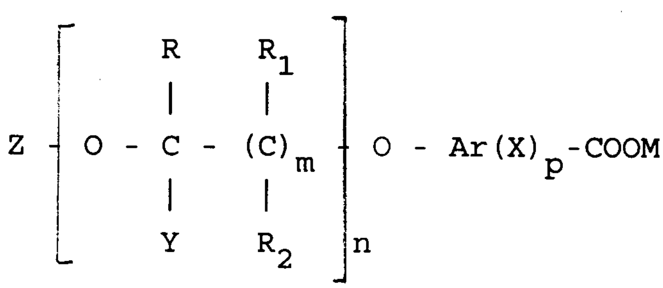 (I)

wherein:

M is an alkali metal or alkaline earth metal;

X is a group selected from

$-CH_2-$,

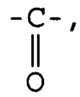 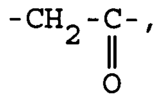 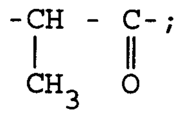

p is 0 or 1;

Ar is a normal or condensed aromatic ring of from 6 to 14 carbon atoms, optionally, having one or more substituents selected from halogen atoms, $C_1$-$C_8$ alkyl groups, $C_1$-$C_8$ alkoxy groups or nitro groups; or Ar represents two or more optionally substituted aromatic nuclei, each of them having from 6 to 14 carbon atoms, linked either by a covalent bond or by an -O-, -S-, $-SO_2-$, -SO-, -CO-, -CS-, -NH- group;

R, $R_1$, $R_2$, the same or different from each other, represent H, a linear or branched $C_1$-$C_6$ alkyl group, optionally having one or more substituents selected from halogen atoms and $C_1$-$C_6$ alkoxy groups;

Y is H or methyl;

m is 1 when Y is methyl; or an integer of from 1 to 5 inclusive when Y = H;

n is a number ranging from 1 to 500 inclusive;

Z is a group selected from H, $C_1$-$C_{18}$ alkyl, benzyl;

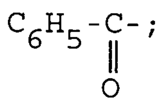 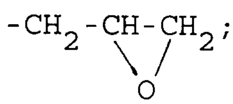 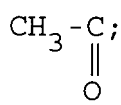 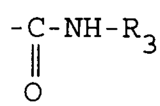

$-CH_2-CH=CH_2$ or

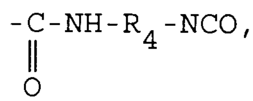

wherein $R_3$ represents an unsubstituted phenyl group or a phenyl group substituted with one or more halogen atoms or is a $C_{10}$-$C_{40}$ alkyl group; $R_4$ represents an unsubstituted phenylene group or a phenylene group substituted with one or more halogen atoms or is a $C_{10}$-$C_{40}$ alkylene group.

**8.** A process according to claim 7, wherein the nucleating agent is added in the form of a separately prepared masterbatch.

**9.** A process according to claim 8, wherein the masterbatch is added in amounts ranging from 1 to 50% by weight, preferably from 2 to 20% by weight, based on the resin.

**10.** A process according to any one of claims 8 and 9, wherein the masterbatch is obtained by mixing the nucleating agent having formula (I) with a polyester resin in concentrations ranging from 0.5 to 20% by weight, preferably from 1 to 10% by weight, based on the resin.

**11.** A process according to any one of claims 7 to 10, wherein additionally one or more additives selected from inert fillers such as glass, carbon, boron fibres and/or inorganic particles of glass, mica, zeolites, graphite or talc; organic fibres of the aramide or polyacrylonitrile type and the like and/or thermal (or processing) stabilizers, plasticizers, dyes and pigments, flame retardants, release agents, antioxidants, light stabilizers, other types of thermoplastic resins or elastomeric compositions are added.

## Patentansprüche

## Patentansprüche für folgende Vertragsstaaten : AT, BE, DE, FR, GB, NL, SE

1. Schnell kristallisierende Polyester-Zusammensetzungen, umfassend ein thermoplastisches Polyester-Harz und 0,1 bis 30 Gewichts-%, bezogen auf das Harz, eines Keimbildungsmittels, das ausgewählt ist aus Salzen oder Mischungen von Salzen von organischen Säuren der allgemeinen Formel:

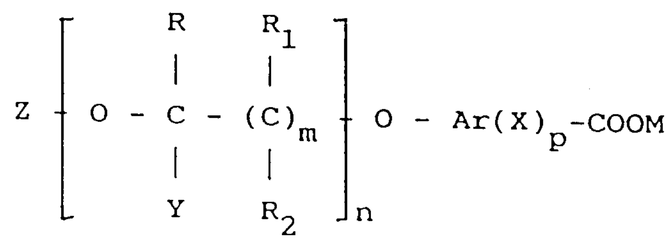

(I)

worin:
M ein Alkalimetall oder Erdalkalimetall darstellt;
X eine Gruppe ist, die ausgewählt ist aus
$-CH_2-$,

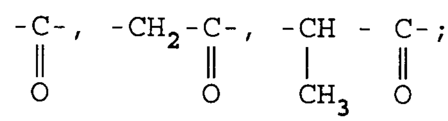

p 0 oder 1 ist;
Ar ein normaler oder kondensierter aromatischer Ring mit 6 bis 14 Kohlenstoffatomen, der gegebenenfalls einen oder mehrere Substituenten aufweist, die ausgewählt sind aus Halogenatomen, $C_1$-$C_8$-Alkylgruppen, $C_1$-$C_8$-Alkoxygruppen oder Nitrogruppen, ist; oder Ar zwei oder mehr gegebenenfalls substituierte aromatische Kerne darstellt, von denen jeder 6 bis 14 Kohlenstoffatome aufweist, entweder durch eine kovalente Bindung oder durch eine Gruppe -O-, -S-, $-SO_2-$, -SO-, -CO-, -CS-, -NH- verbunden;
R, $R_1$, $R_2$, gleich oder verschieden voneinander, Wasserstoff, eine lineare oder verzweigte $C_1$-$C_6$-Alkylgruppe, gegebenenfalls einen oder mehrere aus Halogenatomen und $C_1$-$C_6$-Alkoxygruppen ausgewählte Substituenten aufweisend, darstellen;
Y H oder Methyl ist;
m 1 ist, wenn Y Methyl ist; oder eine ganze Zahl von 1 bis einschließlich 5 ist, wenn Y = H;
n eine Zahl im Bereich von 1 bis einschließlich 500 ist;
Z eine Gruppe darstellt, die ausgewählt ist aus H, $C_1$-$C_{18}$-Alkyl, Benzyl;

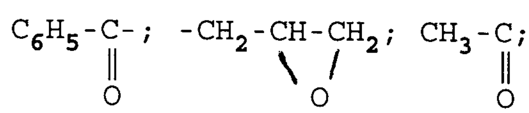

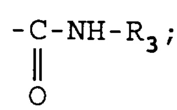

$-CH_2-CH=CH_2$ oder

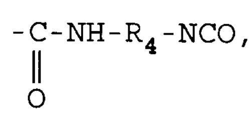

worin $R_3$ eine unsubstituierte Phenylgruppe oder eine mit einem oder mehreren Halogenatomen substituierte Phenylgruppe darstellt oder eine $C_{10}$-$C_{40}$-Alkylgruppe ist; $R_4$ eine unsubstituierte Phenylengruppe oder eine mit einem oder mehreren Halogenatomen substituierte Phenylengruppe darstellt oder eine $C_{10}$-$C_{40}$-Alkylengruppe ist.

**2.** Zusammensetzungen nach Anspruch 1, in welchen das Keimbildungsmittel in Mengen im Bereich von 0,2 bis 15 Gewichts-%, bezogen auf das Harz, zugesetzt ist.

**3.** Zusammensetzungen nach Anspruch 1 oder 2, in welchen das thermoplastische Polyester-Harz aus Polyethylenterephthalat, Polybutylenterephthalat, Mischungen oder Copolymeren davon und Polyethylenterephthalat, das durch Einführung von Polyoxyalkylen-, Polyarylat- oder Polycarbonat-Segmenten modifiziert ist, ausgewählt ist.

**4.** Zusammensetzungen nach irgendeinem der Ansprüche 1 bis 3, in welchen in Formel (I) p = 0, Ar eine 1,4-Phenylengruppe darstellt, R, $R_1$ und $R_2$ H bedeuten und m = 1.

**5.** Zusammensetzungen nach irgendeinem der vorangehenden Ansprüche, in welchen in der allgemeinen Formel (I) Z für eine Glycidyl-, Acetyl-, Benzoyl-, Allyl-, $C_1$-$C_{18}$-Alkyl- oder Benzylgruppe steht.

**6.** Zusammensetzungen nach irgendeinem der vorangehenden Ansprüche, die zusätzlich umfassen ein oder mehrere Additive, die ausgewählt sind aus inerten Füllstoffen wie beispielsweise Glas-, Kohlenstoff-, Borfasern und/oder anorganische Teilchen von Glas, Glimmer, Zeolithen, Graphit oder Talkum; organischen Fasern vom Aramid- oder Polyacrylnitril-Typ und dergleichen und/oder thermischen (oder Verarbeitungs-) Stabilisatoren, Weichmachern, Farbstoffen und Pigmenten, Flammverzögerungsmitteln, Trennmitteln, Antioxidantien, Lichtstabilisatoren, anderen Typen von thermoplastischen Harzen oder elastomeren Zusammensetzungen.

**7.** Verfahren zur Herstellung einer Zusammensetzung nach irgendeinem der vorangehenden Ansprüche, in welchem das Keimbildungsmitteln in Form eines separat hergestellten Konzentrats zugesetzt wird.

**8.** Verfahren nach Anspruch 7, in welchem das Konzentrat in Mengen im Bereich von 1 bis 50 Gewichts-%, vorzugsweise 2 bis 20 Gewichts-%, bezogen auf das Harz, zugesetzt wird.

**9.** Verfahren nach irgendeinem der Ansprüche 7 und 8, in welchem das Konzentrat durch Mischen des Keimbildungsmittels der Formel (I) mit einem Polyester-Harz in Konzentrationen im Bereich von 0,5 bis 20 Gewichts-%, vorzugsweise 1 bis 10 Gewichts-%, bezogen auf das Harz, erhalten wird.

**Patentansprüche für folgenden Vertragsstaat : ES**

**1.** Schnell kristallisierende Polyester-Zusammensetzungen, umfassend ein thermoplastisches Polyester-Harz und 0,1 bis 30 Gewichts-%, bezogen auf das Harz, eines Keimbildungsmittels, das ausgewählt ist aus Salzen oder Mischungen von Salzen von organischen Säuren der allgemeinen Formel:

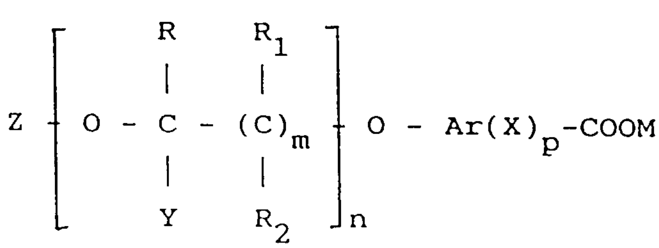

(I)

worin:

M ein Alkalimetall oder Erdalkalimetall darstellt;

X eine Gruppe ist, die ausgewählt ist aus

$-CH_2-$,

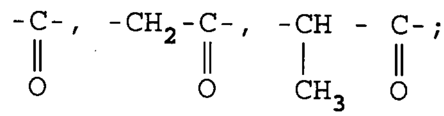

p 0 oder 1 ist;

Ar ein normaler oder kondensierter aromatischer Ring mit 6 bis 14 Kohlenstoffatomen, der gegebenenfalls einen oder mehrere Substituenten aufweist, die ausgewählt sind aus Halogenatomen, $C_1$-$C_8$-Alkylgruppen, $C_1$-$C_8$-Alkoxygruppen oder Nitrogruppen, ist; oder Ar zwei oder mehr gegebenenfalls substituierte aromatische Kerne darstellt, von denen jeder 6 bis 14 Kohlenstoffatome aufweist, entweder durch eine kovalente Bindung oder durch eine Gruppe -O-, -S-, $-SO_2-$, -SO-, -CO-, -CS-, -NH- verbunden;

R, $R_1$, $R_2$, gleich oder verschieden voneinander, Wasserstoff, eine lineare oder verzweigte $C_1$-$C_6$-Alkylgruppe, gegebenenfalls einen oder mehrere aus Halogenatomen und $C_1$-$C_6$-Alkoxygruppen ausgewählte Substituenten aufweisend, darstellen;

Y H oder Methyl ist;

m 1 ist, wenn Y Methyl ist; oder eine ganze Zahl von 1 bis einschließlich 5 ist, wenn Y = H;

n eine Zahl im Bereich von 1 bis einschließlich 500 ist;

Z eine Gruppe darstellt, die ausgewählt ist aus H, $C_1$-$C_{18}$-Alkyl, Benzyl;

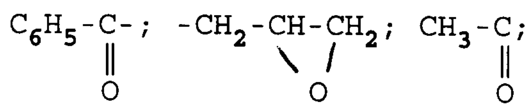

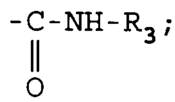

$-CH_2-CH=CH_2$ oder

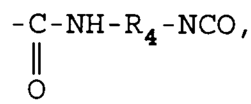

worin $R_3$ eine unsubstituierte Phenylgruppe oder eine mit einem oder mehreren Halogenatomen substituierte Phenylgruppe darstellt oder eine $C_{10}$-$C_{40}$-Alkylgruppe ist; $R_4$ eine unsubstituierte Phenylengruppe oder eine mit einem oder mehreren Halogenatomen substituierte Phenylengruppe darstellt oder eine $C_{10}$-$C_{40}$-Alkylengruppe ist.

**2.** Zusammensetzungen nach Anspruch 1, in welchen das Keimbildungsmittel in Mengen im Bereich von 0,2 bis 15 Gewichts-%, bezogen auf das Harz, zugesetzt ist.

**3.** Zusammensetzungen nach Anspruch 1 oder 2, in welchen das thermoplastische Polyester-Harz aus Polyethylenterephthalat, Polybutylenterephthalat, Mischungen oder Copolymeren davon und Polyethylenterephthalat, das durch Einführung von Polyoxyalkylen-, Polyarylat- oder Polycarbonat-Segmenten modifiziert ist, ausgewählt ist.

**4.** Zusammensetzungen nach irgendeinem der Ansprüche 1 bis 3, in welchen in Formel (I) p = 0, Ar eine 1,4-Phenylengruppe darstellt, R, $R_1$ und $R_2$ H bedeuten und m = 1.

**5.** Zusammensetzungen nach irgendeinem der vorangehenden Ansprüche, in welchen in der allgemeinen Formel (I) Z für eine Glycidyl-, Acetyl-, Benzoyl-, Allyl-, $C_1$-$C_{18}$-Alkyl- oder Benzylgruppe steht.

6. Zusammensetzungen nach irgendeinem der vorangehenden Ansprüche, die zusätzlich umfassen ein oder mehrere Additive, die ausgewählt sind aus inerten Füllstoffen wie beispielsweise Glas-, Kohlenstoff-, Borfasern und/oder anorganische Teilchen von Glas, Glimmer, Zeolithen, Graphit oder Talkum; organischen Fasern vom Aramid- oder Polyacrylnitril-Typ und dergleichen und/oder thermischen (oder Verarbeitungs-) Stabilisatoren, Weichmachern, Farbstoffen und Pigmenten, Flammverzögerungsmitteln, Trennmitteln, Antioxidantien, Lichtstabilisatoren, anderen Typen von thermoplastischen Harzen oder elastomeren Zusammensetzungen.

7. Verfahren zur Herstellung schnell kristallisierender Polyester-Zusammensetzungen, welches umfaßt die Zugabe, zu einem thermoplastischen Polyester-Harz, von 0,1 bis 30 Gewichts-%, bezogen auf das Harz, eines Keimbildungsmittels, das ausgewählt ist aus Salzen oder Mischungen von Salzen von organischen Säuren der allgemeinen Formel:

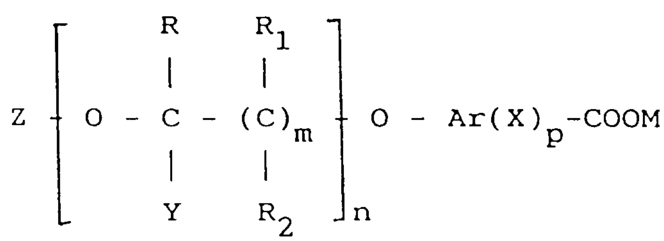

(I)

worin:
M ein Alkalimetall oder Erdalkalimetall darstellt;
X eine Gruppe ist, die ausgewählt ist aus
$-CH_2-$,

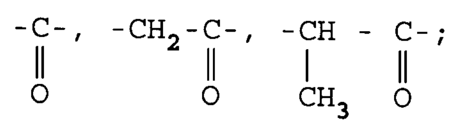

p 0 oder 1 ist;
Ar ein normaler oder kondensierter aromatischer Ring mit 6 bis 14 Kohlenstoffatomen, der gegebenenfalls einen oder mehrere Substituenten aufweist, die ausgewählt sind aus Halogenatomen, $C_1$-$C_8$-Alkylgruppen, $C_1$-$C_8$-Alkoxygruppen oder Nitrogruppen, ist; oder Ar zwei oder mehr gegebenenfalls substituierte aromatische Kerne darstellt, von denen jeder 6 bis 14 Kohlenstoffatome aufweist, entweder durch eine kovalente Bindung oder durch eine Gruppe -O-, -S-, $-SO_2-$, -SO-, -CO-, -CS-, -NH- verbunden;
R, $R_1$, $R_2$, gleich oder verschieden voneinander Wasserstoff, eine lineare oder verzweigte $C_1$-$C_6$-Alkylgruppe, gegebenenfalls einen oder mehrere aus Halogenatomen und $C_1$-$C_6$-Alkoxygruppen ausgewählte Substituenten aufweisend, darstellen;
Y H oder Methyl ist;
m 1 ist, wenn Y Methyl ist; oder eine ganze Zahl von 1 bis einschließlich 5 ist, wenn Y = H;
n eine Zahl im Bereich von 1 bis einschließlich 500 ist;
Z eine Gruppe darstellt, die ausgewählt ist aus H, $C_1$-$C_{18}$-Alkyl, Benzyl;

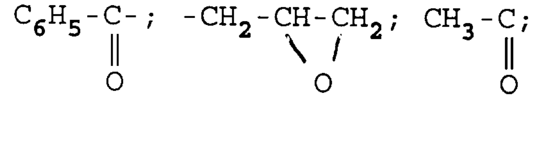

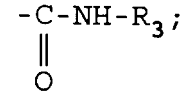

$-CH_2-CH=CH_2$ oder

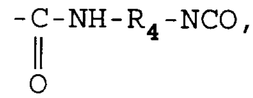

worin $R_3$ eine unsubstituierte Phenylgruppe oder eine mit einem oder mehreren Halogenatomen substituierte Phenylgruppe darstellt oder eine $C_{10}$-$C_{40}$-Alkylgruppe ist; $R_4$ eine unsubstituierte Phenylengruppe oder eine mit einem oder mehreren Halogenatomen substituierte Phenylengruppe darstellt oder eine $C_{10}$-$C_{40}$-Alkylengruppe ist.

**8.** Verfahren nach Anspruch 7, in welchem das Keimbildungsmittel in Form eines separat hergestellten Konzentrats zugesetzt wird.

**9.** Verfahren nach Anspruch 8, in welchem das Konzentrat in Mengen im Bereich von 1 bis 50 Gewichts-%, vorzugsweise 2 bis 20 Gewichts-%, bezogen auf das Harz, zugesetzt wird.

**10.** Verfahren nach irgendeinem der Ansprüche 8 und 9, in welchem das Konzentrat durch Mischen des Keimbildungsmittels der Formel (I) mit einem Polyester-Harz in Konzentrationen im Bereich von 0,5 bis 20 Gewichts-%, vorzugsweise 1 bis 10 Gewichts-%, bezogen auf das Harz, erhalten wird.

**11.** Verfahren nach irgendeinem der Ansprüche 7 bis 10, in welchem zusätzlich ein oder mehrere Additive zugesetzt werden, die ausgewählt sind aus inerten Füllstoffen wie beispielsweise Glas-, Kohlenstoff-, Borfasern und/oder anorganische Teilchen von Glas, Glimmer, Zeolithen, Graphit oder Talkum; organischen Fasern vom Aramid- oder Polyacrylnitril-Typ und dergleichen und/oder thermischen (oder Verarbeitungs-) Stabilisatoren, Weichmachern, Farbstoffen und Pigmenten, Flammverzögerungsmitteln, Trennmitteln, Antioxidantien, Lichtstabilisatoren, anderen Typen von thermoplastischen Harzen oder elastomeren Zusammensetzungen.

**Revendications**
**Revendications pour les Etats contractants suivants : AT, BE, DE, FR, GB, NL, SE**

**1.** Compositions polyesters à cristalisation rapide comprenant une résine à base de polyester thermoplastique et de l'ordre de 0,1 à 30% en poids, par rapport au poids de la résine, d'un agent de nucléation sélectionné parmi les sels ou les mélanges de sels d'acides organiques de formule générale:

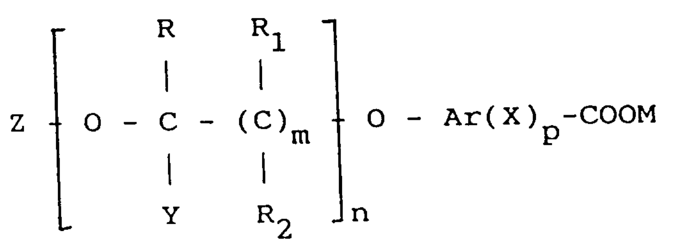
(I)

dans laquelle:
M est un métal alcalin ou un métal alcalino-terreux;
X est un groupe sélectionné parmi
$-CH_2-$,

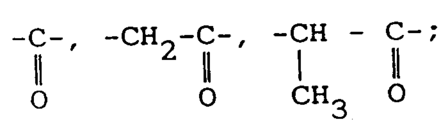

p est égal à 0 ou 1;

Ar est un noyau aromatique condensé ou simple de 6 à 14 atomes de carbone ayant éventuellement 1 ou plusieurs substituant sélectionné parmi les atomes d'halogènes, les groupes d'alkyle en $C_1$ à $C_8$ les groupes alkoxy en $C_1$ à $C_8$, ou des groupes nitro; ou bien, Ar représente deux ou plus noyaux aromatique éventuellement substitués, chacun d'eux ayant de 6 à 14 atomes de carbone liés soit par une liaison covalente, soit par un groupe -O-, -S-, $-SO_2$, -SO-, -CO-, --CS-, NH-.

R, $R_1$, $R_2$, identiques ou différents les uns des autres, représentent un atome d'hydrogène, un groupe alkyle en $C_1$ à $C_6$ linéaire ou ramifié, éventuellement substitué par un ou plusieurs substituants sélectionnés parmi les atomes d'halogène et les groupes alkoxy en $C_1$ à $C_6$;

Y est un atome d'hydrogène ou un groupe méthyle;

m est égal à 1 lorsque Y est un groupe méthyle; ou est un nombre entier de 1 à 5 (bornes incluses) lorsque Y est H;

n est un nombre de 1 à 500 bornes incluses ;

Z est un atome de H ou un groupe sélectionné parmi les groupes alkyle en $C_1$ à $C_{18}$, benzyle;

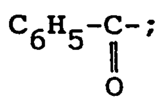 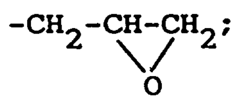 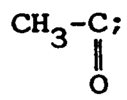 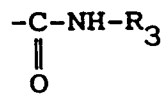

$-CH_2-CH=CH_2$ or

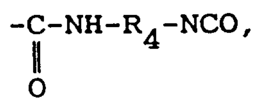

où $R_3$ représente un groupe phényle non substitué ou un groupe phényle substitué par un ou plusieurs atomes d'halogène ou est un groupe alkyle en $C_{10}$ à $C_{40}$; $R_4$ représente un groupe phénylène non substitué ou un groupe phénylène substitué par un ou plusieurs atomes halogène ou est un groupe d'alkylène en $C_{10}$ à $C_{40}$.

**2.** Compositions selon la revendication 1, dans lesquelles l'agent de nucléation est ajouté en des quantités de l'ordre de 0,2 à 15% en poids par rapport au poids de la résine.

**3.** Compositions selon la revendication 1 ou la revendication 2, dans lesquelles la résine de polyester thermoplastique est sélectionnée parmi polyéthylène téréphthalate, polybutylène téréphthalate, leurs mélanges ou leurs copolymères et polyéthylène téréphthalate modifié par l'introduction de segments polyoxyalkylène, polyarylate ou polycarbonate

**4.** Compositions selon l'une quelconque des revendications 1 à 3 dans lesquelles dans la formule (I), p = 0, Ar est un groupe 1,4- phénylène, R, $R_1$ et $R_2$ sont des atomes d'hydrogène et m = 1.

**5.** Compositions selon une quelconque des revendications précédentes, dans lesquelles, dans la formule (I), Z est un groupe glycidyle, acétyle, benzoyle, allyle, alkyle en $C_1$ à $C_{18}$ ou benzyle.

**6.** Compositions selon l'une quelconque des revendications précédentes comprenant également un ou plusieurs additifs sélectionnés parmi des charges inertes telles que verre, carbone, fibre de bore et/ou particules inorganique de verre, mica, zéolite, graphite ou talc; fibres organiques de type aramide ou polyacrylonitrile et similaire et/ou stabilisants thermiques (ou de traitement), agents plastifiants, pigments ou colorants, agents ignifugeants, agents antiadhérents, agents antioxydants, agents de stabisation à la lumière, autres types de résine thermoplastique ou compositions élastomères.

**7.** Un procédé de préparation d'une composition selon l'une quelconque des revendications précédentes dans lequel l'agent de nucléation est ajouté sous forme d'un mélange mère préparé séparement.

**8.** Un procédé selon la revendication 7, dans lequel le mélange mère est ajouté en une quantité de l'ordre de 1 à 50% en poids, de préférence de l'ordre de 2 à 20% en poids par rapport au poids de la résine.

**9.** Un procédé selon l'une quelconque des revendications 7 et 8 dans lequel le mélange mère est obtenu par malaxage de l'agent de nucléation de formule (I) avec une résine de polyester dans des concentrations de l'ordre de 0,5 à 20% en poids, de préférence de l'ordre de 1 à 10% en poids par rapport au poids de la résine.

**Revendications pour l'Etat contractant suivant : ES**

**1.** Compositions polyesters à cristallisation rapide comprenant une résine à base de polyester thermoplastique et de l'ordre de 0,1 à 30% en poids, par rapport au poids de la résine, d'un agent de nucléation sélectionné parmi les sels ou les mélanges de sels d'acides organiques de formule générale:

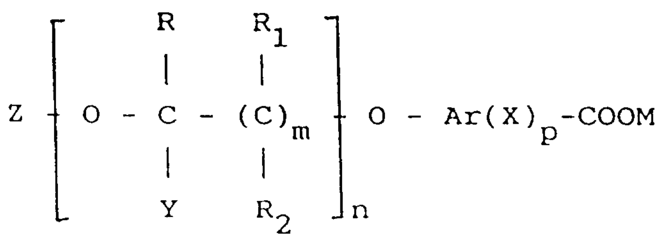

(I)

dans laquelle:
M est un métal alcalin ou un métal alcalino-terreux;
X est un groupe sélectionné parmi
$-CH_2-$,

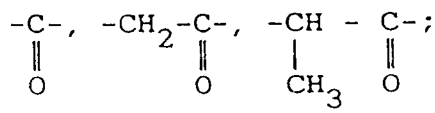

p est égal à 0 ou 1;

Ar est un noyau aromatique condensé ou simple de 6 à 14 atomes de carbone ayant éventuellement 1 ou plusieurs substituant sélectionné parmi les atomes d'halogènes, les groupes d'alkyle en $C_1$ à $C_8$ les groupes alkoxy en $C_1$ à $C_8$, ou des groupes nitro; ou bien, Ar représente deux ou plus noyaux aromatique éventuellement substitués, chacun d'eux ayant de 6 à 14 atomes de carbone liés soit par une liaison covalente, soit par un groupe -O-, -S-, $-SO_2$, -SO-, -CO-, -CS-, NH-.

R, $R_1$, $R_2$, identiques ou différents les uns des autres, représentent un atome d'hydrogène, un groupe alkyle en $C_1$ à $C_6$ linéaire ou ramifié, éventuellement substitué par un ou plusieurs substituants sélectionnés parmi les atomes d'halogène et les groupes alkoxy en $C_1$ à $C_6$;

Y est un atome d'hydrogène ou un groupe méthyle;

m est égal à 1 lorsque Y est un groupe méthyle; ou est un nombre entier de 1 à 5 (bornes incluses) lorsque Y est H;

n est un nombre de 1 à 500 bornes incluses ;

Z est un atome de H ou un groupe sélectionné parmi les groupes alkyle en $C_1$ à $C_{18}$, benzyle;

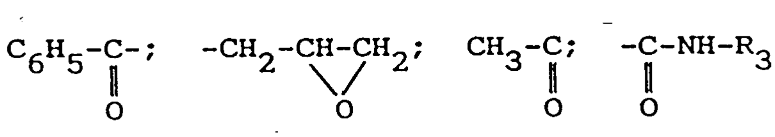

$-CH_2-CH=CH_2$ or

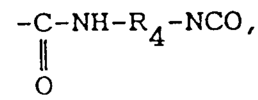

où $R_3$ représente un groupe phényle non substitué ou un groupe phényle substitué par un ou plusieurs atomes d'halogène ou est un groupe alkyle en $C_{10}$ à $C_{40}$; $R_4$ représente un groupe phénylène non substitué ou un groupe phénylène substitué par un ou plusieurs atomes halogène ou est un groupe d'alkylène en $C_{10}$ à $C_{40}$.

**2.** Compositions selon la revendication 1, dans lesquelles l'agent de nucléation est ajouté en des quantités de l'ordre de 0,2 à 15% en poids par rapport au poids de la résine.

**3.** Compositions selon la revendication 1 ou la revendication 2, dans lesquelles la résine de polyester thermoplastique est sélectionnée parmi polyéthylène téréphthalate, polybutylène téréphthalate, leurs mélanges ou leurs copolymères et polyéthylène téréphthalate modifié par l'introduction de segments polyoxyalkylène, polyarylate ou polycarbonate

**4.** Compositions selon l'une quelconque des revendications 1 à 3 dans lesquelles dans la formule (I), p = 0, Ar est un groupe 1,4-phénylène, R, $R_1$ et $R_2$ sont des atomes d'hydrogène et m = 1.

**5.** Compositions selon une quelconque des revendications précédentes, dans lesquelles, dans la formule (I), Z est un groupe glycidyle, acétyle, benzoyle, allyle, alkyle en $C_1$ à $C_{18}$ ou benzyle.

**6.** Compositions selon l'une quelconque des revendications précédentes comprenant également un ou plusieurs additifs sélectionnés parmi des charges inertes telles que verre, carbone, fibre de bore et/ou particules inorganique de verre, mica, zéolite, graphite ou talc; fibres organiques de type aramide ou polyacrylonitrile et similaire et/ou stabilisants thermiques (ou de traitement), agents plastifiants, pigments ou colorants, agents ignifugeants, agents antiadhérents, agents antioxydants, agents de stabisation à la lumière, autres types de résine thermoplastique ou compositions élastomères.

**7.** Un procédé de préparation de compositions polyesters à cristallisation rapide, ce procédé comprenant l'addition à une résine à base de polyester thermoplastique de 0,1 à 30% en poids, par rapport au poids de la résine, d'un agent de nucléation sélectionné parmi les sels ou les mélanges de sels d'acides organiques de formule générale:

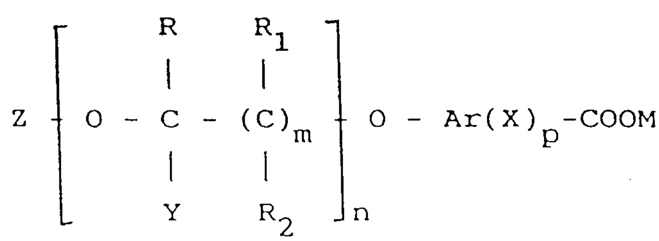

(I)

dans laquelle:
M est un métal alcalin ou un métal alcalino-terreux;
X est un groupe sélectionné parmi
$-CH_2-$,

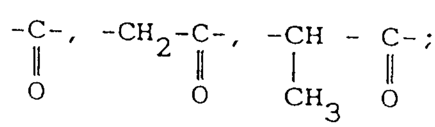

p est égal à 0 ou 1;
Ar est un noyau aromatique condensé ou simple de 6 à 14 atomes de carbone ayant éventuellement 1 ou plusieurs substituant sélectionné parmi les atomes d'halogènes, les groupes d'alkyle en $C_1$ à $C_8$ les groupes alkoxy en $C_1$ à $C_8$, ou des groupes nitro; ou bien, Ar représente deux ou plus noyaux aromatique éventuellement substitués, chacun d'eux ayant de 6 à 14 atomes de carbone liés soit par une liaison covalente, soit par un groupe -O-, -S-, $-SO_2$, -SO-, -CO-, --CS-, NH-.

R, $R_1$, $R_2$, identiques ou différents les uns des autres, représentent un atome d'hydrogène, un groupe alkyle en $C_1$ à $C_6$ linéaire ou ramifié, éventuellement substitué par un ou plusieurs substituants sélectionnés parmi les atomes d'halogène et les groupes alkoxy en $C_1$ à $C_6$;

Y est un atome d'hydrogène ou un groupe méthyle;

m est égal à 1 lorsque Y est un groupe méthyle; ou est un nombre entier de 1 à 5 (bornes incluses) lorsque Y est H;

n est un nombre de 1 à 500 bornes incluses ;

Z est un atome de H ou un groupe sélectionné parmi les groupes alkyle en $C_1$ à $C_{18}$, benzyle;

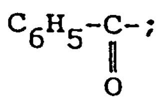
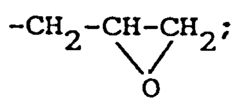
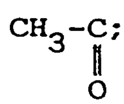
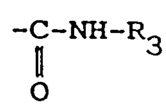

$-CH_2-CH=CH_2$ or

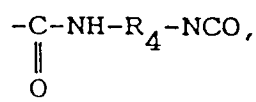

où $R_3$ représente un groupe phényle non substitué ou un groupe phényle substitué par un ou plusieurs atomes d'halogène ou est un groupe alkyle en $C_{10}$ à $C_{40}$; $R_4$ représente un groupe phénylène non substitué ou un groupe phénylène substitué par un ou plusieurs atomes halogène ou est un groupe d'alkylène en $C_{10}$ à $C_{40}$.

**8.** Un procédé selon la revendication 7, caractérisé en ce que l'agent de nucléation est ajouté sous la forme d'un mélange mère préparé séparément.

**9.** Un procédé selon la revendication 8, dans lequel le mélange mère est ajouté en une quantité de l'ordre de 1 à 50% en poids, de préférence de l'ordre de 2 à 20% en poids, par rapport au poids de la résine.

**10.** Un procédé selon l'une quelconque des revendications 8 et 9 dans lequel le mélange mère est obtenu par malaxage de l'agent de nucléation de formule (I) avec une résine de polyester dans des concentrations de l'ordre de 0,5 à 20% en poids, de préférence de l'ordre de 1 à 10% en poids par rapport au poids de la résine.

**11.** Un procédé selon une quelconque des revendications 7 à 10, dans lequel, en outre, sont ajoutés un ou plusieurs additifs sélectionnés parmi les charges inertes, telles que verre, carbone, fibres de bore et/ou particules inorganiques de verre, mica, zéolites, graphite ou talc; fibres organiques du type aramide ou polyacrylonitrile et similaire et/ou stabiliseurs thermiques (ou relatif aux conditions de traitement), plastifiants, colorants et pigments, retardateurs de flamme, agents de démoulage, antioxydants, stabilisants à la lumière et autres types de résine thermoplastique ou compositions élastomères.